# EUROPEAN PATENT SPECIFICATION

(11) **EP 3 050 711 B1**
(45) Date of publication and mention of the grant of the patent: **21.03.2018**
(21) Application number: 16152825.2
(22) Date of filing: 26.01.2016
(51) Int. Cl.: B42C 15/00

(54) **MACHINE FOR COVERING BOOKS**
MASCHINE ZUM UMHÜLLEN VON BÜCHERN
MACHINE POUR COUVRIR DES LIVRES

(30) Priority: 27.01.2015 IT MI20150097
(43) Date of publication of application: 03.08.2016
(73) Proprietor: RI. Plast S.r.l. Dei F. LLI Rioli, 20010 Pogliano Milanese (MI) (IT)
(72) Inventor: Rioli, Angelo, I-20017 Rho (MI) (IT); Torri, Matteo, I-22020 Faggeto Lario (CO) (IT); Hasuike, Makio, I-20143 Milano (IT)
(74) Representative: Zanoli, Enrico

(56) References cited:
- EP-A1- 0 908 328
- WO-A1-03/004282
- WO-A1-2013/107674
- IT-A1- MI20 081 489

## Description

The present invention relates to a machine for covering paper material. In particular, the present invention relates to a machine for covering books, notebooks and the like by means of a sheet of flexible thermoplastic material.

Applying a cover, or jacket, to items made prevalently of paper material, such as books, notebooks and the like, by the user or holder of said items, is a very common practice and is an effective way of protecting them from wear.

Various types of covers are known for books, notebooks, albums and the like. The simplest of these consists of a sheet, made of different materials according to needs, to fold and cut to be adapted to the dimensions and to the thickness of the item to be covered. Another kind is the ready-to-use sheet, which requires only be applied to the item, as it is manufactured with dimensions suitable for the article to be covered.

In the case of cover obtained from a sheet of paper or flexible plastic material, the user has to cut, fold and glue this sheet in order to manually create the cover in the size suitable for the book. In this case, the main drawback is the noteworthy amount of time required by the user to affix the cover manually, and the considerable manual skills required to affix it.

Therefore, application of covers or jackets to paper material such as books, notebooks, albums and the like directly by the stationer or book-seller has become widespread, especially in the case of school books. In fact, in this case the number of books to cover at the start of the school year is considerable, and therefore the purchaser of the book is prepared to pay a reasonable surcharge to receive the book already covered and ready for use.

This widespread request to purchase books that have already been covered by the stationer or book-seller has led to the need to provide a machine that enables automation of all or part of the operation for application of the cover to the books, in order to allow the stationer to expedite the task.

Although various types of machines for covering books already exist on the market, these have some drawbacks. In particular, machines for covering books have always suffered from the problem of swarf of thermoplastic material used for coating remaining attached to the heat-sealing part of the machine. Processing swarf that is not removed from the machine can cause difficulties during subsequent covering operations, as it can become lodged between the sheet of flexible thermoplastic and the sealing portion, preventing correct heat-sealing and consequently correct covering of the books. Moreover, during the normal attempt to eliminate this swarf using knifes, scissors or other pointed tools capable of reaching the heat-sealing portion, this heat-sealing part can be damaged, endangering its operation and integrity.

The international patent application WO 03/004282 A1 describes a machine for applying a cover made of flexible plastic material to books and the like. This machine consists of detachable parts in order for it to be disassembled and easily transported, in particular a work surface that is connected by means of pins to a unit that comprises a blade for cutting and heat-sealing sheets of plastic material. More in particular, the cutting and sealing blade is supported by a pair of U-shaped flexible elements that allow an operator, acting on specific levers, to manually lower the blade and thrust it against a counterblade to hot cut a sheet for covering a book interposed between them. These U-shaped elements are made of elastic material that moves the blade elastically away from the counterblade when manual action by an operator ceases.

The main disadvantage of this machine is the need for manual operation of the blade, which does not allow a high level of automation of the operation for applying said covers. In fact, this apparatus does not comprise electro-mechanical actuators but only the use of levers and elastic elements that allow the blade to be moved toward the counterblade to obtain the cut. Moreover, the unit that comprises the cutting and sealing blade does not allow easy access to the aforesaid blade to perform cleaning operations and to eliminate processing swarf that can cause the aforesaid problems.

European patent application EP0908328A1 describes a machine for covering the hard or flexible cover of books using a film, comprising a cutting and heat-sealing assembly, wherein the cutting and heat-sealing assembly comprises a movable element with a longitudinal blade, attached at e front part of a block, which can rotate on a pin driving the lever. Said machine does not comprise electromechanical actuators but only mechanical levers in order to move the block and the blade. Moreover, the machine is devoid of any means for controlling the temperature of the blade, and therefore it is impossible to control the operating condition of the machine in order to optimize the covering procedure.

The Italian patent application MI2008A001489 describes equipment for covering books and the like comprising control means to define heating cycles of the blade and translation of the support so as to carry the blade into contact with the flexible thermoplastic sheet and make the cut. Therefore, the equipment comprises a linear electro-mechanical actuator for moving the blade when a heating cycle of the blade, according to methods and times programmed by means of the circuit integrated in the board, is performed.

Also in this case the blade, which also acts as sealing means, is not easily accessible to allow operations for cleaning and removing processing swarf of thermoplastic material, which remains attached to the heating blade, endangering the subsequent covering operations.

Moreover, a further disadvantage of this equipment is the impossibility of determining the heating temperature of the blade with precision. In fact, it is subjected to a heat administering cycle that is interrupted at the end of a given period of time, without considering the temperature reached.

Therefore, it would be desirable to obtain a machine for covering books, notebooks and the like in which it is possible to eliminate processing swarf of thermoplastic material that remains attached to the sealing portion of the equipment easily and without endangering the integrity of the equipment, to obtain covers that are always the same and perfect.

It would also be desirable for this machine to eliminate or reduce the disadvantages of prior art equipment, and in particular to reduce the amount of manual action by an operator during application of covers or jackets to books, notebooks and the like.

Finally, it would be desirable for this machine to be produced inexpensively, using the smallest possible number of components and in the shortest possible time. In particular, it would be desirable for the components used to produce the machine to allow wear thereof to be minimized.

Therefore, the aim of the present invention is to provide a machine for covering paper material by means of a sheet of flexible thermoplastic material that minimizes the problems related to known equipment, as described above.

Within this aim, an object of the present invention is to provide a machine for covering paper material by means of a sheet of flexible thermoplastic material achieving the maximum level of automation possible for the operations required to obtain said covering.

Another object of the present invention is to provide a machine for covering paper material wherein the covering process is automated and accelerated, in order to reduce the operating time and to reduce the operating costs of the machine.

A further object of the present invention is to provide a machine for covering paper material capable of allowing precise adjustment of the temperature of the cutting tool to obtain heat-sealing of any flexible thermoplastic material and with any boundary thermal conditions.

Yet another object of the present invention is to provide a machine for covering paper material capable of minimizing handling of the sheet during operations, limiting movement and the creation of bubbles of air in the heat-sealed portion.

The aforesaid objects are achieved by a machine for covering paper material with a sheet of flexible thermoplastic material, as defined in claim 1. In this way, it is possible to easily access the heatable cutting tool to perform cleaning operations of the tool and to eliminate processing swarf. Moreover, almost complete automation of the heat-sealing and cutting operations is achieved, thereby effectively controlling the temperature of the cutting tool.

Preferably, the rotation means comprise pins coupled to the end portions of said bar and coupled to said support.

In this way precise rotation of the bar and at the same time of the cutting tool is guaranteed through a mechanism that is simple to achieve and maintain.

Preferably, said support is provided with holes suitable for coupling of said pins. In this way it is possible to rapidly couple the bar to the supports and consequently to the work surface.

Preferably, the bar can take a position according to an angle of between 0 and 90°. In this way, a complete rotation of the bar with respect to the supports can be achieved.

Preferably, the means for controlling the temperature comprise at least one temperature sensor applied to and/or in operative connection with the cutting tool. Even more preferably, the means for controlling the temperature comprise at least one thermocouple applied to the cutting tool.

In this way it is possible to ensure precision and minimize systematic errors in detection of the aforesaid temperature.

Preferably, the machine also comprises means for adjusting said temperature threshold by a user operatively connected to said control means.

In this way, the temperature of the cutting tool can be adjusted in relation to the different materials that can be used for heat-sealing. This possibility enables different temperatures to be set for heating the cutting tool, to obtain heat-sealing on any type of flexible thermoplastic material, increasing the possibilities of use of the machine. Moreover, the possibility of determining the heating temperature with precision allows the machine to be used in very different environmental conditions while constantly having the same optimal heat-sealing properties.

Preferably the cutting tool is a blade that extends, at least partially, along the length of the bar. In this way, homogeneous and precise cutting and heat-sealing are obtained.

Further features and advantages of the present invention will be more apparent from the description of preferred embodiments, illustrated in the accompanying figures, wherein:
- Fig. 1 is a perspective schematic view of a first embodiment of the machine for covering paper material according to the present invention in which the bar is in vertical position;
- Fig. 2 is an exploded view of the embodiment shown in Fig. 1;
- Fig. 3 is a perspective schematic view of a first embodiment of the machine for covering paper material according to the present invention in which the bar is in inclined position;

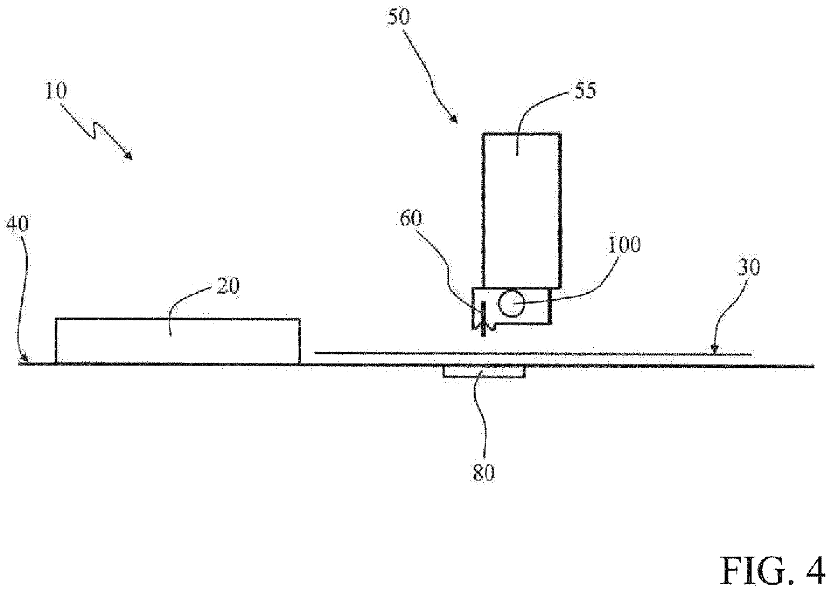

- Fig. 4 is a sectional schematic view of a first embodiment of the machine for covering paper material according to the present invention in which the bar is in vertical position;

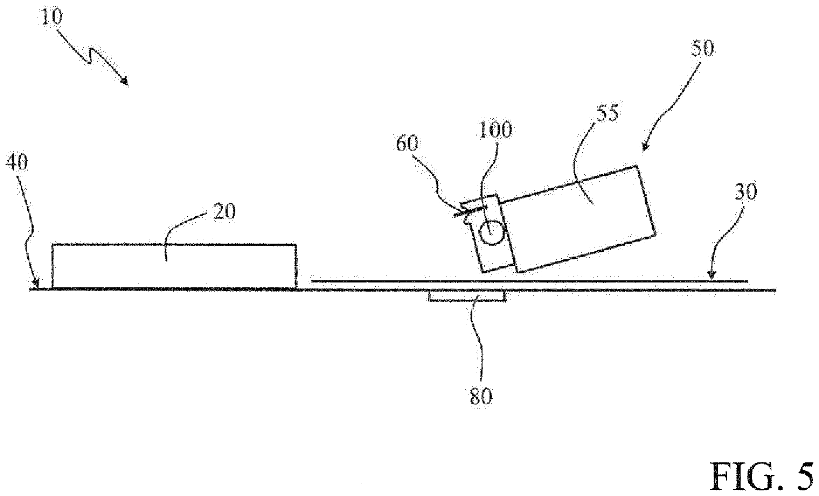

- Fig. 5 is a sectional schematic view of a first embodiment of the machine for covering paper material according to the present invention in which the bar is in inclined position;
- Fig. 6a is a sectional schematic view of a second embodiment of the machine for covering paper material according to the present invention in which the bar is in non-operating position;
- Fig. 6b is a sectional schematic view of the second embodiment of the machine for covering paper material according to the present invention in which the bar is in operating position;
- Fig. 6c is a sectional schematic view of a second embodiment of the machine for covering paper material according to the present invention in which the bar is in inclined position.

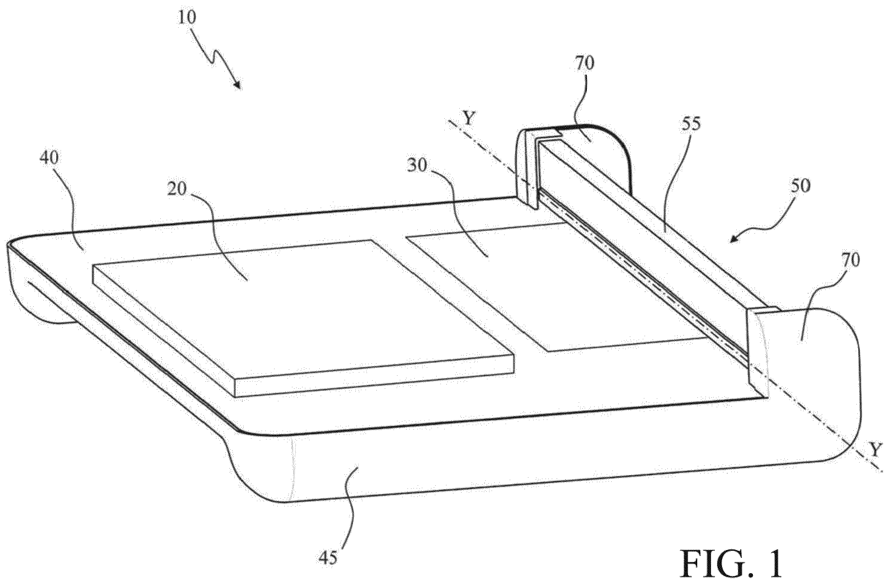

Figs. 1, 2 and 3 show the machine 10 for covering paper material 20 with a sheet 30 of flexible thermoplastic material. This comprises a horizontal work surface 40, placed on which is the sheet 30 of flexible thermoplastic material suitable to form the cover or jacket of paper material 20 such as a book, a notebook or the like.

The machine 10 comprises cutting means 50 placed in the region of the distal upper surface with respect to the operator. The cutting means 50 comprise a bar 55, preferably metal, provided with a heatable cutting tool 60, located in the lower portion of the bar 55 at the horizontal work surface 40. The bar 55 consists of a rectangular frame, preferably made of metal material, into which the cutting tool 60 is inserted, in a position above the horizontal work surface 40.

The machine 10 also comprises a support 70 coupled to the work surface 40 that allows the cutting means 50 to be supported by coupling the bar 55 to the supports.

Besides performing cutting operations, the heatable cutting tool 60 also allows heat-sealing of the sheet of flexible thermoplastic used to cover the desired paper material. Heat-sealing is performed as a result of the possibility of heating the tool 60, which will be described below.

The bar 55, and consequently the cutting tool 60, can translate in vertical direction, i.e. perpendicular to the horizontal work surface 40, due to an electromechanical actuator (not shown) located inside the machine 10. The electromagnetic actuator is preferably of the screw-lead screw coupling type. The worm screw is operated by an electric motor and is coupled to a lead screw fixed to the lower side of the bar 55. Rotation of the worm screw thus determines linear translation of the lead screw and of the bar 55. The direction of rotation is reversible so that the cutting tool 60 can be raised to a position not in contact with the work surface, or lowered until it is brought into contact with the horizontal work surface 40 and the sheet 30 to be cut.

Many kinds of actuators differing from the screw-lead screw type previously described, but which could also be used for translation of the cutting tool 60 according to the present invention, area available on the market.

The control means (not shown) are achieved by means of a programmable integrated circuit, inserted into the base 45 of the machine 10. These control means are capable of achieving the operating position of the cutting tool 112 for heat-sealing and subsequent cutting of the sheet 2.

The cutting tool 60 is made by means of a blade that extends fully along the length of the bar 55. Alternatively, this blade can also extend only partially along the length of the bar 55. The blade can be made of a conductive material, such as metal or a suitable metal alloy, for example Ni-Cr steel, to ensure adequate mechanical strength and at the same time good thermal conductivity that allows rapid heating thereof to obtain heat-sealing. If the bar is made of metal material, the groove into which the blade is inserted in the bar 55 can be coated with a layer of insulating material. The cutting tool 60 is connected by means of cables to an electrical board comprising a programmable integrated circuit; the tool is also connected to the control means and to a transformer. According to the present invention, the electrical components of the machine 10 are supplied at low voltage (24V).

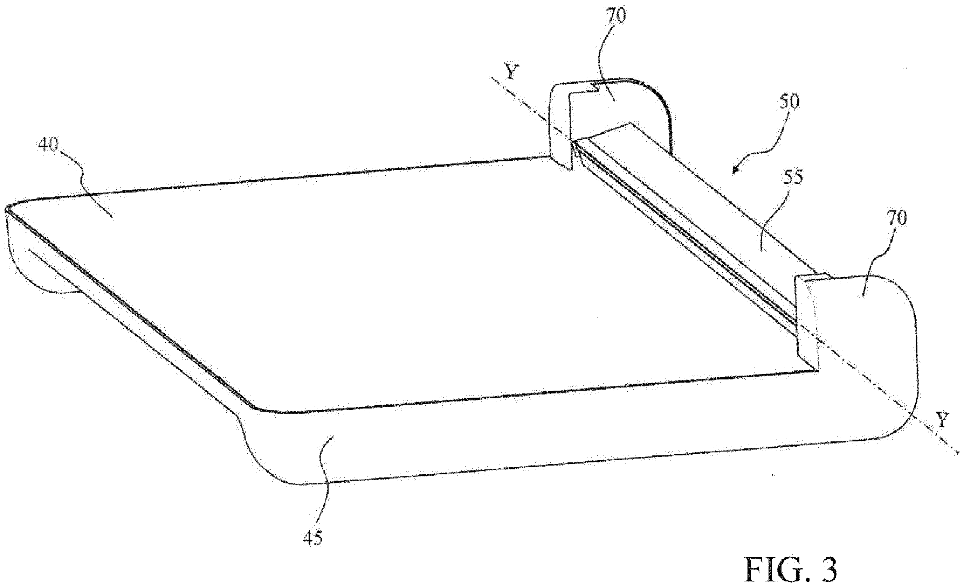

The bar 55 is provided with rotation means that allow it to rotate around its longitudinal axis Y-Y, or around the axis passing through the length of the bar, as shown in Fig. 3. The rotation means allow the bar 55 to take an inclined position not in contact with the sheet 30.

In particular, the bar 55 can take a position that varies according to an angle of between 0 and 90°. According to the present invention, an angle of 0° is considered as the position in which the bar can perform the vertical translation movement described above, which allows the bar to pass from a non-operating position to an operating position in which the cutting tool 60 is in contact with the sheet 30. The bar can therefore rotate around its axis Y-Y during the non-operating step, thereby exposing the cutting tool to the operator to facilitate operations for cleaning and removing swarf.

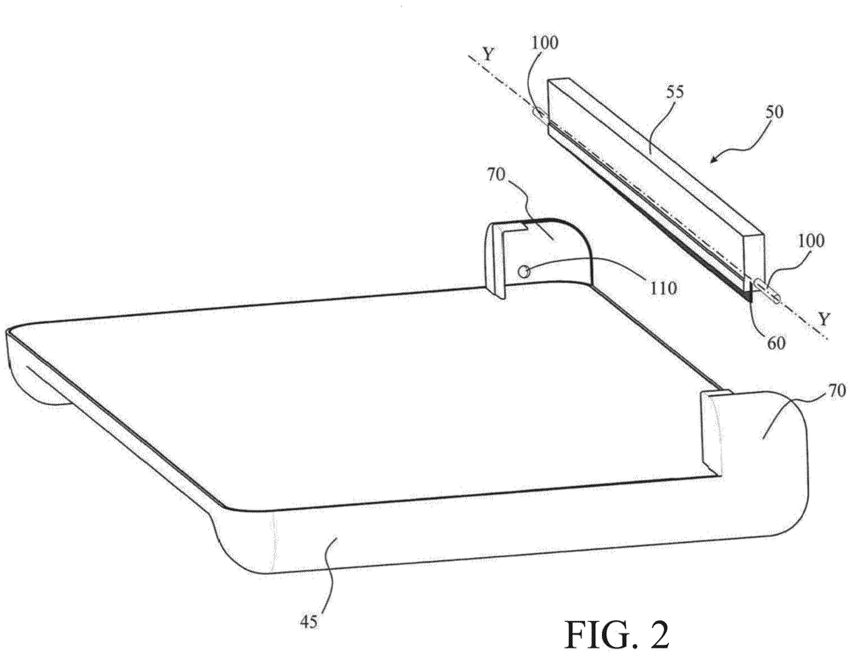

The rotation means comprise a pair of pins 100 coupled to the distal end portions of the bar 55, as shown in Fig. 2. These pins 100 protrude from the distal end portions of the bar and allow rotating coupling of the bar 55 with the supports 70 coupled to the horizontal work surface 40.

The supports 70 are provided with holes 110 positioned on their inner face, i.e. facing the inside of the machine 10, as shown in Fig. 2. The rotating coupling of the bar 55 with the supports 70 takes place by insertion of the pins 100 into holes 110, this coupling allows the pin to rotate freely inside the hole in which it is housed, thereby allowing the bar to rotate around the axis Y-Y.

The machine 10 is also provided with means for blocking rotation of the bar 55 around the axis Y-Y (not shown), which prevent rotation of the bar 55 during operation of the machine, and in particular during passage of the bar, and of the cutting tool, from the non-operating position to the operating position in contact with the sheet 30. These blocking means can be mechanical means that are operated manually by the operator in order to perform cleaning operations, or electronic means connected to the control means, which automatically block and release the bar as a function of the operating cycles.

The machine 10 also comprises means for controlling the temperature of the cutting tool. These control means can be produced by means of a thermocouple fitted to the blade that forms the cutting tool. The thermocouple is operatively connected to the control means to achieve the operating position when a predefined temperature threshold is reached heating the blade. Alternatively, different temperature sensors could also be used, not in direct contact with the cutting tool but operatively connected thereto, for example optical sensors.

The temperature threshold is set by means for adjusting the temperature threshold by the user, operatively connected to the control means. These adjusting means can be obtained by an analog manual selector switch or, alternatively, this control can be of continuous type or can be digitalized and have a viewing display.

The temperature values set and detected in the operating period are used by timer means, operatively connected to the control means, to determine the time for which the cutting tool must be maintained in the operating position.

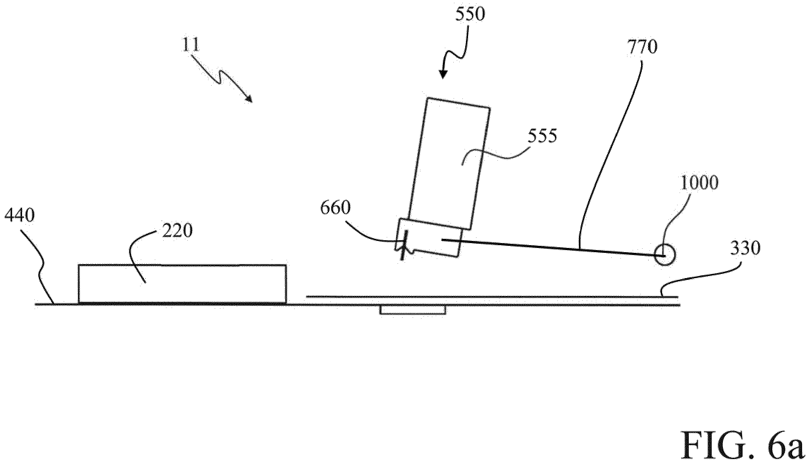

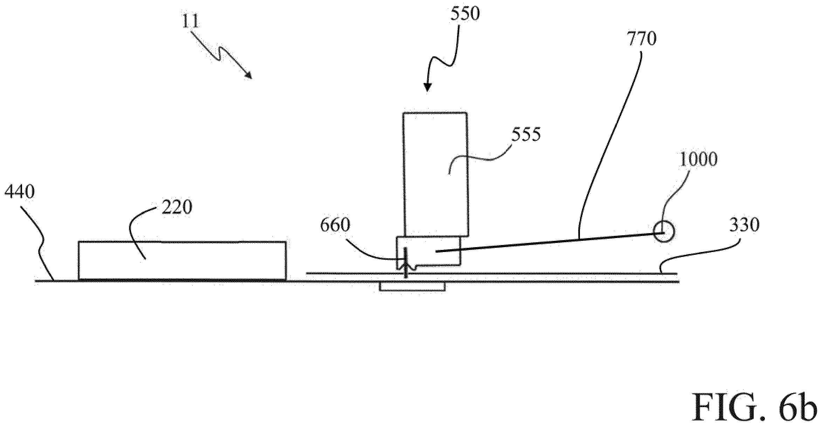

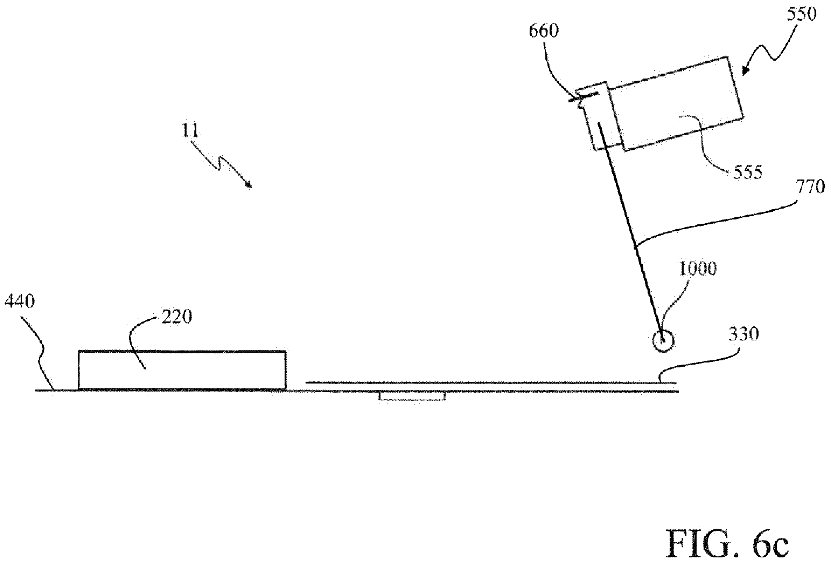

A second embodiment of the machine 11 according to the present invention is schematically shown in Figs. 6a, 6b and 6c. In this embodiment, the cutting means 550 are coupled to the horizontal work surface 440 by supports placed in a distal position of the work surface with respect to the position of the paper material 220 and of the operator. In particular, the bar 555 is provided with an appendix 770 that allows coupling thereof to the related supports (not shown). Fig. 6a schematically shows the machine 11 in which the cutting tool 660 is in the non-operating position, i.e. not in contact with the sheet of plastic material 330. Fig. 6b shows the machine 11 in which the cutting tool 660 is in the operating position, i.e. in which it is in contact with the sheet of plastic material 330 allowing cutting and/or heat-sealing thereof. Passage of the cutting tool from the non-operating position to the operating position can take place through simple pressure of the bar 550 in the direction of the sheet 330. The force required to obtain movement is greater than the tensile strength implemented by the appendix 770 that allows coupling of the bar to the supports. In a further embodiment, not shown in the accompanying figures, the movement from the non-operating position to the operating position takes place mechanically due to the use of a gear motor.

Also in this second embodiment, the bar 555 is provided with rotation means that enable the bar to take an inclined position not in contact with the sheet of flexible thermoplastic allowing the operator to easily perform cleaning and maintenance operations on the cutting tool. In particular, the rotation means are composed of pins 1000 coupled to the appendix 770 in the position opposite the bar 550, and which are therefore positioned externally to the bar 550. The pins 1000 allow rotation of the bar 550 around an axis parallel to the longitudinal axis Y-Y of the bar. The pins 1000 are inserted in specific holes (not shown) positioned on the supports coupled to the horizontal work surface 440, thereby allowing coupling of the bar 550 to the horizontal work surface 440 and at the same time allowing rotation of the bar.

With the machine for covering paper material according to the present invention it is possible to obtain a high level of automation of the operations required to apply the cover and at the same time allows easy access to the cutting and heat-sealing tools to perform correct cleaning and remove processing swarf.

Moreover, the possibility of setting different temperatures for heating the cutting tool allows heat-sealing to be obtained on any type of flexible thermoplastic material, increasing the possibilities of use of the machine. The possibility of determining the heating temperature with precision allows the machine to be used in very different environmental conditions with the same optimal heat-sealing features.

## Claims

1. Machine (10) for covering paper material (20) with a sheet (30) of flexible thermoplastic material, comprising:
• a horizontal work surface (40)
• cutting means (50), superimposed on said work surface (40) and parallel thereto, comprising a bar (55) provided with a heatable cutting tool (60) capable of taking an operating position, in contact with said sheet (30), and a non-operating position, not in contact with said sheet (30);
• a support (70) for said bar (30) coupled to said horizontal work surface (40);
• control means, capable of controlling the operating position of said cutting tool (112) for heat-sealing and/or for cutting said sheet (2); wherein said bar (55) is provided with rotation means (100, 110) around a longitudinal axis (YY) passing through said bar, or around an axis parallel to said longitudinal axis and external to said bar, said rotation means being capable of taking said bar (55) to an inclined position not in contact with said sheet (30); **characterized in that** said machine comprises means for controlling the temperature of said cutting tool (60) operatively connected to said control means to achieve said operating position when a predefined temperature threshold is reached by said cutting tool (60).

2. Machine (10) according to claim 1, **characterized in that** said rotation means comprise pins (100) coupled to the end portions of said bar (55) and coupled to said support (70).

3. Machine (10) according to one or more of the preceding claims, **characterized in that** said support (70) is provided with holes (110) suitable for coupling of said pins (100).

4. Machine (10) according to one or more of the preceding claims, **characterized in that** said bar (55) can take a position according to an angle between 0 and 90°.

5. Machine (10) according to one or more of the preceding claims, **characterized in that** said means for controlling the temperature comprise at least one temperature sensor applied to and/or in operative connection with said cutting tool (60).

6. Machine (10) according to one or more of the preceding claims, **characterized by** comprising means for adjusting said temperature threshold by the user operatively connected to said control means.

7. Machine (10) according to one or more of the preceding claims, **characterized in that** said cutting tool (60) is a blade that extends, at least partially, along the length of said bar (55).

## Patentansprüche

1. Maschine (10) zum Bedecken von Papiermaterial (20) mit einem Bogen (30) aus flexiblem thermoplastischem Material, aufweisend:
- eine horizontale Arbeitsoberfläche (40);
- eine Schneideeinrichtung (30), die auf die Arbeitsoberfläche (40) aufgesetzt und parallel dazu ist, aufweisend eine Stange (55), die mit einem beheizbaren Schneidewerkzeug (60) versehen ist, das in der Lage ist, eine Betriebsposition, bei der sie sich mit dem Bogen (30) in Kontakt befindet, und eine Nichtbetriebsposition, bei der sie sich nicht mit dem Bogen (30) in Kontakt befindet, einzunehmen;
- einen Träger (70) für die Stange (30), der mit der horizontalen Arbeitsoberfläche (40) verbunden ist;
- eine Steuereinrichtung, die in der Lage ist, die Betriebsposition des Schneidewerkzeugs (112) zur Heißversiegelung und/oder zum Schneiden des Bogens (2) zu steuern;
wobei die Stange (55) Dreheinrichtungen (100, 110) um eine Längsachse (YY), die durch die Stange verläuft, oder um eine Achse, die zu der Längsachse parallel ist und außerhalb der Stange liegt, beinhaltet, wobei die Dreheinrichtungen in der Lage sind, die Stange (55) in eine geneigte Position zu versetzen, die sich mit dem Bogen (30) nicht in Kontakt befindet;
**dadurch gekennzeichnet, dass**
die Maschine eine Einrichtung zum Steuern der Temperatur des Schneidewerkzeugs (60) aufweist, das mit der Steuereinrichtung operativ verbunden ist, um die Betriebsposition zu erreichen, wenn eine vorgegebene Temperaturschwelle durch das Schneidewerkzeug (60) erreicht wird.

2. Maschine (10) nach Anspruch 1, **dadurch gekennzeichnet, dass** die Dreheinrichtungen Stifte (100) aufweisen, die mit den Endabschnitten der Stange (55) verbunden und mit dem Träger (70) verbunden sind.

3. Maschine (10) nach einem oder mehreren der vorgenannten Ansprüche, **dadurch gekennzeichnet, dass** der Träger (70) mit Löchern (110) versehen ist, die geeignet sind, die Stifte (100) zu verbinden.

4. Maschine (10) nach einem oder mehreren der vorgenannten Ansprüche, **dadurch gekennzeichnet, dass** die Stange (55) eine Position gemäß einem Winkel zwischen 0 und 90° einnehmen kann.

5. Maschine (10) nach einem oder mehreren der vorgenannten Ansprüche, **dadurch gekennzeichnet, dass** die Einrichtung zum Steuern der Temperatur zumindest einen Temperatursensor aufweist, der an dem Schneidewerkzeug (60) zur Anwendung kommt oder sich mit diesem in operativer Verbindung befindet.

6. Maschine (10) nach einem oder mehreren der vorgenannten Ansprüche, **dadurch gekennzeichnet, dass** sie eine Einrichtung zum Einstellen der Temperaturschwelle durch den Benutzer aufweist, die mit der Steuereinrichtung operativ verbunden ist.

7. Maschine (10) nach einem oder mehreren der vorgenannten Ansprüche, **dadurch gekennzeichnet, dass** das Schneidewerkzeug (60) eine Klinge ist, die zumindest teilweise entlang der Länge der Stange (55) verläuft.

## Revendications

1. Machine (10) pour couvrir un document papier (20) avec une feuille (30) de matière thermoplastique souple, comprenant:
- une surface de travail horizontale (40)
- des moyens de découpe (50), superposés à ladite surface de travail (40) et parallèles à celle-ci, comprenant une barre (55) pourvue d'un outil de découpe chauffant (60) capable de prendre une position opérationnelle, en contact avec ladite feuille (30), et une position non opérationnelle qui n'est pas en contact avec ladite feuille (30);
- un support (70) pour ladite barre (30) couplé à ladite surface de travail horizontale (40) ;
- des moyens de contrôle, capables de contrôler la position opérationnelle dudit outil de découpe (112) pour le thermoscellage et/ou la découpe de ladite feuille (2);
dans lequel ladite barre (55) est pourvue de moyens de rotation (100, 110) autour d'un axe longitudinal (YY) traversant ladite barre, ou autour d'un axe parallèle audit axe longitudinal et extérieur à ladite barre, lesdits moyens de rotation étant capables d'amener ladite barre (55) dans une position inclinée qui n'est pas en contact avec ladite feuille (30) ;
**caractérisé en ce que** ladite machine comprend des moyens pour contrôler la température dudit outil de découpe (60) connectés opérationnellement auxdits moyens de contrôle pour obtenir ladite position opérationnelle lorsqu'un seuil de température prédéfini est atteint par ledit outil de découpe (60).

2. Machine (10) selon la revendication 1, **caractérisée en ce que** lesdits moyens de rotation comprennent des axes (100) couplés aux parties d'extrémité de ladite barre (55) et couplés audit support (70).

3. Machine (10) selon une ou plusieurs des revendications précédentes, **caractérisée en ce que** ledit support (70) est pourvu de trous (110) adaptés pour le couplage desdits axes (100).

4. Machine (10) selon une ou plusieurs des revendications précédentes, **caractérisée en ce que** ladite barre (55) peut prendre une position selon un angle compris entre 0 et 90°.

5. Machine (10) selon une ou plusieurs des revendications précédentes, **caractérisée en ce que** lesdits moyens pour contrôler la température comprennent au moins un capteur de température appliqué audit outil de découpe (60) et/ou en connexion opérationnelle avec celui-ci.

6. Machine (10) selon une ou plusieurs des revendications précédentes, **caractérisée en ce qu'**elle comprend des moyens pour régler ledit seuil de température par connexion opérationnelle de l'utilisateur auxdits moyens de contrôle.

7. Machine (10) selon une ou plusieurs des revendications précédentes, **caractérisée en ce que** ledit outil de découpe (60) est une lame qui s'étend, au moins partiellement, sur la longueur de ladite barre (55).
